Europäisches Patentamt

European Patent Office

Office européen des brevets

(19)

(11) Veröffentlichungsnummer: **0 336 268 B1**

(12) **EUROPÄISCHE PATENTSCHRIFT**

(45) Veröffentlichungstag der Patentschrift: **24.02.93**

(21) Anmeldenummer: **89105486.8**

(22) Anmeldetag: **28.03.89**

(51) Int. Cl.⁵: $F03D \ 3/06$

(54) **Windkraftanlage.**

(30) Priorität: **26.03.88 DE 3810339**

(43) Veröffentlichungstag der Anmeldung:
**11.10.89 Patentblatt 89/41**

(45) Bekanntmachung des Hinweises auf die
Patenterteilung:
**24.02.93 Patentblatt 93/08**

(84) Benannte Vertragsstaaten:
**AT BE CH DE ES FR GB GR IT LI NL SE**

(56) Entgegenhaltungen:
**EP-A- 0 030 357** **DE-A- 2 816 026**
**FR-A- 730 384** **FR-A- 2 459 381**
**US-A- 4 129 787** **US-A- 4 525 124**

(73) Patentinhaber: **HEIDELBERG MOTOR GESELL-
SCHAFT FUER ENERGIEKONVERTER MBH
Petersbrunner Strasse 2
W-8130 Starnberg(DE)**

(72) Erfinder: **Heidelberg, Götz, Dipl.-Phys.
Am Hügel 16
W-8136 Starnberg-Percha(DE)**

(74) Vertreter: **Klunker . Schmitt-Nilson . Hirsch
Winzererstrasse 106
W-8000 München 40 (DE)**

## Beschreibung

Die Erfindung bezieht sich auf eine Windkraftanlage zur Nutzbarmachung von Windenergie, mit einem auf einem Mast angeordneten, unter der Einwirkung von Wind um eine aufrechte Drehachse drehbaren Rotor, der mit mehreren, sich aufrecht erstreckenden, von der Drehachse beabstandeten Rotorblättern versehen ist, wobei der Rotor pro Rotorblatt zwei übereinander angeordnete, innen im wesentlichen in einer Höhenebene zusammenlaufende und außen zu dem Rotorblatt führende Ausleger aufweist.

Bei einer bekannten Windkraftanlage dieser Art (US-A-4 525 124) ist jeder Ausleger durch einen Träger gebildet, der in Draufsicht eine im Vergleich zu seiner Länge geringe Breite hat. Diese Träger führen zu einer zentralen, senkrechten Welle der Windkraftanlage, ohne daß zwischen den inneren Enden der Träger und der Welle ein Rotorbereich nennenswerter Horizontalausdehnung vorhanden ist.

Aus dem Dokument DE-A-28 16 026 ist eine Windkraftanlage mit aufrechten Rotorblättern bekannt, bei der die Rotorblätter jeweils durch zwei übereinander angeordnete, zu einer zentralen senkrechten Welle führende Träger gehalten sind. Die zwei übereinander angeordneten Träger eines Rotorblatts verlaufen parallel zueinander, laufen also nicht innen in einer Höhenebene zusammen. Zwischen den inneren Enden der Träger und der Welle ist kein Rotorbereich nennenswerter Horizontalausdehnung vorhanden. Die Träger sind in Draufsicht breiter als die beschriebenen Träger der Windkraftanlage gemäß dem Dokument US-A-4 525 124, wobei jedoch die Trägerbreite im Vergleich zur Trägerlänge ebenfalls klein ist.

Der Erfindung liegt die Aufgabe zugrunde, eine konstruktiv einfach aufgebaute und daher kostengünstig herstellbare Windkraftanlage verfügbar zu machen. Sie soll vorzugsweise für größere Leistungen und höhere Windgeschwindigkeiten geeignet sein.

Zur Lösung dieser Aufgabe ist die Windkraftanlage erfindungsgemäß dadurch gekennzeichnet, daß die Ausleger in Draufsicht im wesentlichen dreieckförmig sind, und daß der Rotor einen Zentralbereich aufweist, an den die Ausleger zur Übertragung von Drehmoment um die Rotordrehachse mit ihrer Basis angeschlossen sind.

Vorzugsweise laufen - in Draufsicht gesehen - benachbarte Ausleger jeweils zu vorzugsweise gemeinsamen Anschlußstellen an dem Zentralbereich zusammen.

Vorzugsweise ist die Windkraftanlage so ausgebildet, daß die Rotorblätter - gemessen in Tangentialrichtung ihres Anordnungsdurchmessers - eine Blatttiefe entsprechend folgender Gleichung

haben:

$$t = 0,2 \text{ bis } 0,4 \, D/n$$

wobei t die Blattiefe, D den Rotorblattanordnungsdurchmesser und n die Anzahl der Rotorblätter des Rotors bedeutet.

Die durch die Erfindung gelehrte Rotorblattiefe in Relation zum Rotorblatt-Anordnungsdurchmesser und zur Anzahl der Rotorblätter ist wesentlich größer als die bisher üblicherweise bei derartigen Rotoren eingesetzte Rotorblattiefe. Erfindungsgemäß ist gefunden worden, daß aufgrund der vergößerten Blattiefe, die entsprechend aerodynamischen Gesetzmäßigkeiten mit einer wesentlichen Vergrößerung der radialen Blattdicke und einer wesentlichen Vergrößerung der Rotorblattquerschnitte einhergehen, die Materialspannung in den Rotorblättern, hauptsächlich bestehend aus radialer Biegebeanspruchung, drastisch erniedrigt wird. Dies rührt hauptsächlich daher, daß die Biegebeanspruchung der Rotorblätter aus aerodynamischen Kräften im wesentlichen direkt proportional der Blattiefe ansteigt, während hingegen die Biegebeanspruchbarkeit der Rotorblätter im wesentlichen mit dem Quadrat der Blattiefe ansteigt. Hierdurch ist der Weg offen für Windkraftanlagen höherer Leistung, insbesondere mit relativ großem Anordnungsdurchmesser der Rotorblätter, und fur Windkraftanlagen, die auch höhere Windgeschwindigkeiten von der Festigkeit der Rotorblätter her bewältigen können. Konkret können nach dem Prinzip der Erfindung Windkraftanlagen mit einem Anordnungsdurchmesser der Rotorblätter von mehr als 30 m, vorzugsweise mehr als 50 m, besonders bevorzugt im Bereich von 70 bis 120 m gebaut werden. Konkret können Windkraftanlagen gebaut werden, die auch bei Windgeschwindigkeiten oberhalb 15 m/s, vorzugsweise 17 m/s, besonders bevorzugt im Bereich 18 bis 20 m/s noch arbeitsfähig sind. Konkret ist ein Bereich der Leistungsauslegung von 1,0 MW bis etwa 20 MW abdeckbar, wobei neben der genannten Erfassung auch höherer Windgeschwindigkeiten selbstverständlich der Anordnungsdruchmesser und die aufrechte Länge der Rotorblätter einen wesentlichen Einfluß haben. Es sei jedoch betont, daß die erfindungsgemäße Konzeption nicht ausschließlich für Windkraftanlagen höherer Leistung sinnvoll ist, sondern daß sich auch bei niedrigeren Leistungen insbesondere die Vorteile der drastisch vereinfachten Rotorblattbauweise niederschlagen.

Vorzugsweise ist die Windkraftanlage auf eine vergleichsweise niedrige Umlaufgeschwindigkeit der Rotorblätter ausgelegt, vorzugsweise unter 60 m/s, noch stärker bevorzugt unter 50 m/s, am meisten bevorzugt unter 40 m/s. Dies hält die auf die Rotorblätter wirkenden Fliehkraft-Biegemomente in Grenzen. Die derart weitergebildete Erfindung optimiert die Zusammenhänge Blattiefe, Rotorblatt-Anordnungsdurchmesser und Rotorblatt-Umlaufgeschwindigkeit bzw. Winkelgeschwindigkeit des Rotors im Hinblick auf die Festigkeitsverhältnisse an den Rotorblättern und auf die mit der Windkraftanlage erfaßbare Windquerschnittsfläche.

Vorzugsweise ist die Länge der Rotorblätter bezogen auf den Rotorblatt-Anordnungsdurchmesser kleiner als bisher vorgeschlagen, nämlich vorzugsweise weniger als 100 %, höchst vorzugsweise weniger als 80 %, besonders bevorzugt 45 bis 70 %, des Rotorblatt-Anordnungsdurchmessers. Man zieht also gemäß dieser Weiterbildung der Erfindung eine horizontale Verbreiterung des erfaßten Windquerschnitts einer vertikalen Vergrößerung des erfaßten Windquerschnitts vor unter dem Gesichtspunkt, daß sich hierdurch insbesondere die belastungsmäßigen Verhältnisse und dadurch auch die kostenmäßigen Verhältnisse insgesamt bessern.

Bevorzugte Weiterbildungen der Erfindung hinsichtlich des konstruktiven Aufbaus der Rotorblätter und des Rotors insgesamt sind in den Ansprüchen 10 bis 12, 15, 16 angegeben. Während bisher Rotorblätter von Windkraftanlagen üblicherweise nach den Konstruktionsprizipien von Flugzeugpropellern gebaut worden sind, können die mechanisch wesentlich weniger hoch belasteten Rotorblätter der erfindungsgemäßen Windkraftanlage in wesentlich einfacherer Technik und daher wesentlich kostengünstiger gebaut werden. Bei der Ausführung als Blechkastenkonstruktion gibt es insbesondere die folgenden Möglichkeiten: Selbsttragende Bauweise, bei der die die Rotorblattaußenfläche ergebenden Bleche, ggf. versteift durch innere Längs- und Querrippen, die Strukturfestigkeit erbringen; oder tragende Struktur in Form eines längs des Rotorblatts verlaufenden Hohlkastens, an dem strömungsprofilgebende Bleche oder - besonders bevorzugt - Kunststoffelemente befestigt sind. Insbesondere bei den Weiterbildungen gemäß Ansprüchen 11 und 12 können längs der Rotorblätter durchgehende Profile in kostengünstiger Weise verwendet werden.

Die bevorzugten Anzahlen von drei oder fünf Rotorblättern stellen das Optimum hinsichtlich Bauaufwand, Windausnutzung und Gleichmäßigkeit des Rotorlaufs dar.

Vorzugsweise beträgt die freitragende, aufrechte Länge der Rotorblätter oberhalb und/oder unterhalb der Anschlußstellen an der Tragstruktur des Rotors weniger als 40 %, vorzugsweise weniger als 30 %, der aufrechten Rotorblattlänge. Auch dies stellt ein Optimum zwischen den Belastungsverhältnissen an den Rotorblättern und dem erfaßten Windquerschnitt dar. Ganz besonders bevorzugt ist eine Konfiguration, bei der die Rotorblätter jeweils an einen unteren und einen oberen Ausleger angeschlossen sind und die Rotorblattlänge zu etwa einem Viertel auf unteren, freitragenden Überstand, zu etwa zwei Viertel auf den Bereich zwischen den beiden Auslegern, und zu etwa einem Viertel auf den oberen, freitragenden Überstand aufgeteilt ist.

Man kann eine Einrichtung zur Steuerung des Rotorblattanstellwinkels, gemessen relativ zur jeweiligen Tangente an den Anordnungskreis bzw. Bewegungskreis der Rotorblätter, vorsehen, insbesondere um einen Rotoranlauf aus dem Stand zu erreichen. Derartige Einrichtungen sind grundsätzlich bekannt.

Es ist konstruktiv besonders günstig und bevorzugt, den Rotor im wesentlichen nur an einer Lagerungsstelle an dem Mast zu lagern. Diese Lagerungsstelle liegt günstigerweise in einer Höhe des Rotors, die der Höhe der resultierenden, auf den Motor wirkenden Windkraft im wesentlichen entspricht, damit die Lagerung möglichst von Kräften freigehalten ist, die die Drehachse des Rotors schrägstellen wollen. Die Lagerungsstelle befindet sich günstigerweise im Bereich der Mastspitze. Es ist günstig, die Lagerung des Rotors so auszubilden, daß sie kleine Schrägstellungen des Rotors zuläßt. Dies kann in besonders einfacher Weise durch Wälzlager, die eine derartige Beweglichkeit zulassen, beispielsweise Pendelrollenlager oder Pendelkegelrollenlager, bewerkstelligt werden. Aufgrund der "Einpunktlagerung" des Rotors in optimaler Höhenlage und dem erfindungsgemäßen Aufbau des Rotors,
kann man eine Rotortragstruktur für die Rotorblätter verwirklichen, die im wesentlichen frei von Hauptmomenten der angreifenden Lasten ist.

Der Mast und/oder der Rotor können nach den Gesichtpunkten des leichten Stahlbaus, also möglichst ohne biegebeanspruchte Träger, konstruiert sein. Günstig ist die stahlbaumäßige Ausbildung der gesamten Windkraftanlage, weil hierbei die relativ groben Stahlbaunormen und die relativ niedrigen Stahlbaupreise zugrundegelegt werden können.

Die erfindungsgemäße Windkraftanlage ist vorzugsweise zur Erzeugung von Strom aus Windenergie bestimmt. In diesem Fall ist eine Einrichtung zur Umwandlung von Bewegungsenergie des Rotors in elektrische Energie erforderlich, welche Einrichtung - relativ zueinander drehbar und sich unter Freilassung eines Luftspalts gegenüberliegend - ein erstes Funktionsteil und ein zweites Funktionsteil aufweist, wobei eines der beiden Funktionsteile ein Erregersystem und das andere Funktionsteil ein Leitersystem aufweist. Grunsätzlich könnte als Umwandlungseinrichtung ein üblicher Stromgenerator, der über ein Getriebe von dem Rotor antreibbar ist, vorgesehen sein. Bevorzugt ist jedoch, daß,unter Eliminierung eines Getriebes, zur Schaffung der Umwandlungseinrichtung der Mast ein im wesentlichen horizontal angeordneten ersten Tragring großen Durchmessers für das erste Funktionsteil und der Rotor einen im wesentlichen horizontal angeordneten, zweiten Tragring großen Durchmessers für das zweite Funktionsteil aufweist. Dies ergibt in Kombination mit der bevorzugten, relativ geringen Drehzahl des Rotors um seine aufrechte Drehachse eine besonders günstige Bauweise. Trotz der relativ geringen Umfangsgeschwindigkeit der Rotorblätter herrscht zwischen den beiden Funktionsteilen eine wünschenswert hohe Relativgeschwindigkeit wegen des großen Tragringdurchmessers. Die erfindungsgemäße Windkraftanlage muß jedoch nicht zwingend zur Stromerzeugung ausgelegt sein. Man könnte vielmehr die aus der Windenergie gewonnene mechanische Energie der Rotationsbewegung des Rotors direkt nutzen, beispielsweise zum Antrieb von Pumpen, Förderanlagen usw.

In den Ansprüchen und der Beschreibung wird an mehreren Stellen der Begriff "aufrecht" verwendet. Dies bedeutet einen Verlauf von unten nach oben, vorzugsweise einen vertikalen Verlauf, ohne auf die exakte Vertikalität beschränkt zu sein. In den meisten Fällen und bevorzugt sind die Rotorblätter alle mit gleichem Abstand von der Drehachse des Rotors angeordnet, so daß sich ein gemeinsamer Umlaufkreis der Rotorblätter ergibt. Dies ist jedoch keine zwingende Bedingung, da man beispielsweise die Rotorblätter durchaus auf mehr oder weniger stark unterschiedlichen Durchmessern des Rotors anordnen kann.

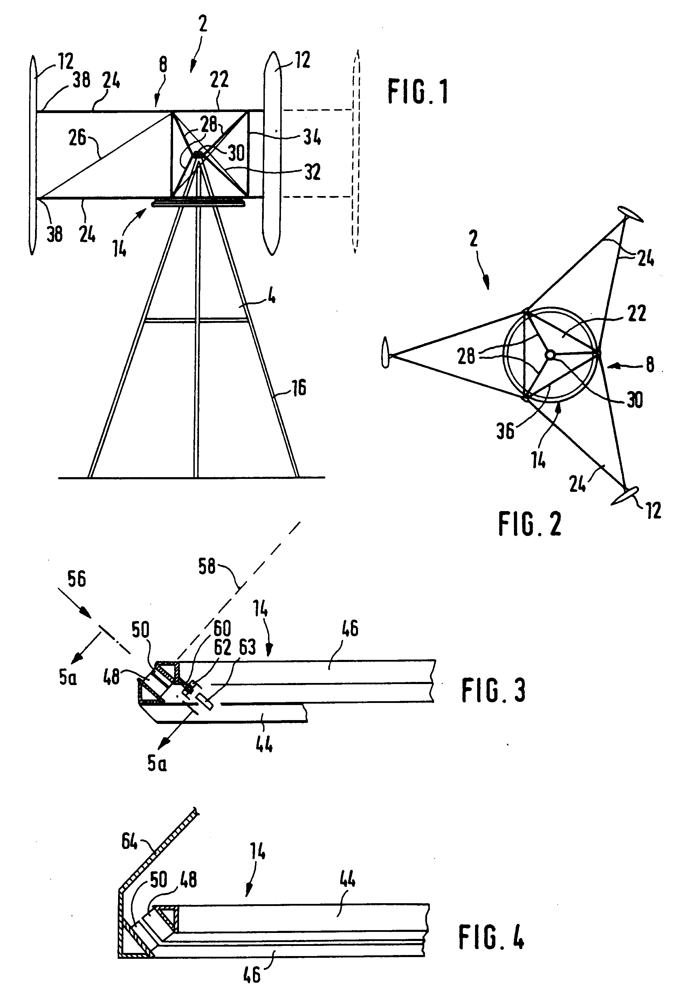

Die Erfindung und Weiterbildungen der Erfindung werden im folgenden anhand eines Ausführungsbeispiels noch näher erläutert, wobei die in den Fig. 1 und 2 gezeigte Vorrichtung nicht erfindungsgemäß ausgebildet ist, aber der Veranschaulichung des Gesamtaufbaus der Windkraftanlage dient.

Es zeigen:

Fig. 1     eine Seitenansicht einer Vorrichtung zur Nutzbarmachung von Windenergie;

Fig. 2     eine Draufsicht auf die Vorrichtung von Fig. 1;

Fig. 3     die Umwandlungseinrichtung der Vorrichtung von Fig. 1 in größerem Maßstab;

Fig. 4     eine Alternativform der Umwandlungseinrichtung in größerem Maßstab;

Fig. 5     einen Teil der Umwandlungseinrichtung von Fig. 3 in Draufsicht gemäß Pfeilen 5a in Fig. 3 und in abgewickelter Radialansicht von außen gemäß Pfeil 5b von außen;

Fig. 6     die Lagerungsstelle des Rotors der Vorrichtung von Fig. 1.

Fig. 7     eine Seitenansicht einer Vorrichtung zur Nutzbarmachung von Windenergie gemäß der Erfindung;

Fig. 8     eine Detailansicht gemäß Pfeil VIII in Fig. 7;

Fig. 9     einen Querschnitt eines Rotorblatts der Vorrichtung von Fig. 1 bzw. 7 in größerem Maßstab.

Die in Fig. 1 und 2 gezeichnete Vorrichtung 2 zur Gewinnung von Strom aus Windenergie besteht im wesentlichen aus einem Mast 4, einem an der Mastspitze um eine vertikale Drehachse gelagerten Rotor 8, der radial außen und gleichmäßig auf einem Anordnungskreis verteilt drei Rotorblätter 12 mit senkrechter Längserstreckungsrichtung trägt, und einer Umwandlungseinrichtung 14 zur Umwandlung von Bewegungsenergie des Rotors 8 in elektrische Energie.

Der Mast 4 hat drei Beine 16, die unten breiter auseinanderstehen und oben zur Mastspitze zusammenlaufen. Der Mast 4 ruht mit Fundamenten auf dem Erdboden oder auf dem Meeresgrund bei geringer Wassertiefe.

Die Tragstruktur des Rotors 8 besteht im wesentlichen aus einem in Draufsicht dreieckigen Zentralbreich 22, sechs von dem Zentralbereich 22 radial nach außen führenden Auslegern 24 und Abspannseilen 26. Der Zentralbereich 22 weist drei senkrechte Träger 34 auf, die durch drei obere und drei untere, waagerechte Verbindungsträger 36 miteinander verbunden sind, sechs Träger 28, die von Eckpunkten des Zentralbereichs 22 zu einer zentralen Lagerungsstelle 30 führen, und Diagonalträger 32 auf. Die Ausleger 24 sind in Draufsicht dreieckig, wobei ihre Basis jeweils an zwei Eckpunkten des Zentralbereichs 22 befestigt ist. Zu jedem Rotorblatt 12 führen übereinander zwei waagerechte Ausleger 24, die einen Abstand voneinander entsprechend der Höhe des Zentralbereichs 22 haben. Von der unteren Anschlußstelle 38 zwischen dem jeweils unteren Ausleger 24 und dem jeweiligen Rotorblatt 12 führt ein Abspannseil 26 schräg nach innen und oben zu einem der oberen Verbindungsträger 36 des Zentralbereichs 22. Die Rotorblätter 12 sind jeweils an ihren beiden Anschlußstellen 38 mit den jeweils zwei zugeordneten Auslegern 24 über nicht gezeichnete Gelenke verbunden, so daß der Rotorblattanstellwinkel, gemessen in Draufsicht zwischen der Rotorblattsehne und der lokalen Tangente an den Anordnungskreis, variabel ist.

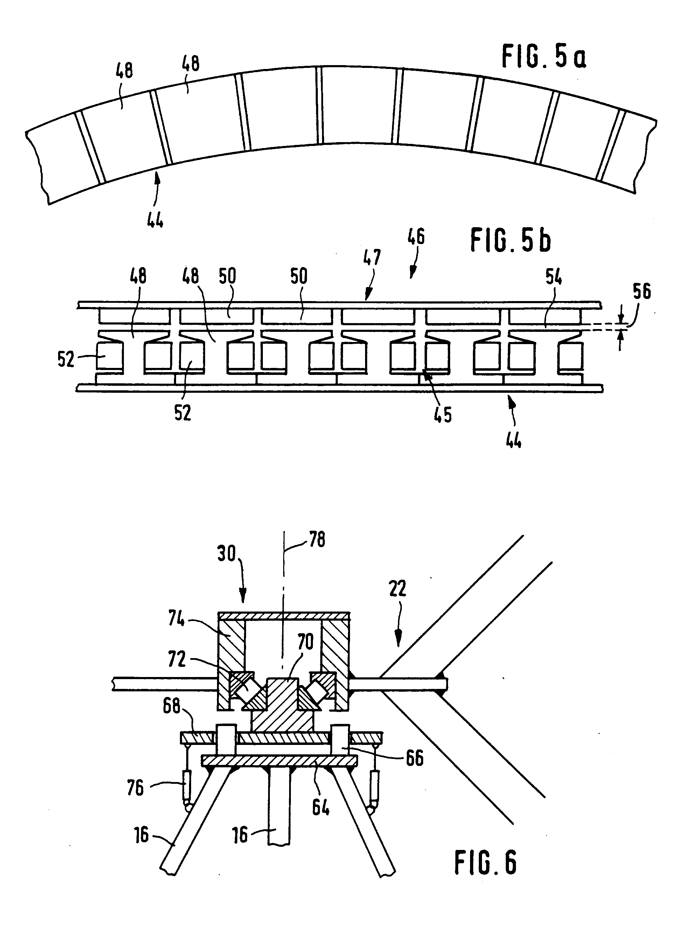

Bei der Ausführungsvariante gemäß Fig. 3 ist ein Stück unterhalb des Rotors 8 am Mast 4 ein im wesentlichen horizontaler, erster Tragring 44 befestigt. An der Unterseite des Zentralbereichs 22 ist ein horizontal angeordneter, zweiter Tragring 46 befestigt, der oberhalb des ersten Tragrings 44 liegt. Die Tragringe 44 und 46 haben einen Außendurchmesser, der etwas kleiner als der Umkreis des Zentralbereichs 22 ist.

In Fig. 3 und 5 erkennt man, daß der erste Tragring 44 längs seines radial äußeren Randes auf der Oberseite mit einer Reihe von Elektromagnetpolen 48 besetzt ist, während der zweite Tragring 46 längs seines radial äußeren Randes auf der Unterseite mit einer Reihe von Dauermagneten 50 mit in Umfangsrichtung wechselnder Polung besetzt ist. Die Polteilungen der Elektromagnetpole 48 und der Dauermagnetpole 50 stimmen miteinander überein. Die Elektromagnetpole sind mit Wicklungen 52 elektrischer Leiter versehen. Zwischen den Elektromagnetpolen 48 und den Dauermagnetpolen 50 befindet sich ein Luftspalt 54 mit einer - senkrecht zu den Polflächen gemessenen Weite 56. Auf diese Weise ist am ersten Tragring 44 ein erstes Funktionsteil 45 mit einem Leitersystem 52 gebildet und ist am zweiten Tragring 46 ein zweites Funktionsteil 47 mit einem Erregersystem 50 gebildet. Diese beiden Funktionsteile bilden die Umwandlungseinrichtung. Wenn der zweite Tragring 46 relativ zu dem stationären, ersten Tragring 44 um die Drehachse des Rotors gedreht wird, wird im Leitersystem 52 ein Wechselstrom induziert, dessen Frequenz von der Rotationsgeschwindigkeit des Rotors 8 und von der Polteilung der beiden Funktionsteile abhängt.

Man erkennt in Fig. 3, daß sich die Luftspaltfläche 54 längs einer Kegelmantelfläche erstreckt. Geraden 58, die rechtwinklig zu den Polflächen der Elektromagnete 48 und der Dauermagnete 50 eingezeichnet sind, schneiden sich in der Drehachse des Rotors 8 in Höhe der Lagerungsstelle 30.

Ferner erkennt man in Fig. 3, daß der zweite Tragring 46 mit einem radial schräg nach innen ragenden Ringfortsatz 60 ausgestattet ist. Auf den Ringfortsatz 60 können Bremsklötze einer Bremseinrichtung 62 wirken. Bei stärkerer Schrägstellung des Rotors 8 kommt der innere Rand des Ringfortsatzes 60 in Kontakt mit Begrenzungsrollen 63.

Die Ausführungsvariante gemäß Fig. 4 unterscheidet sich von der Ausführungsvariante gemäß Fig. 3 dadurch, daß der zweite Tragring 46 mit nach oben weisenden Dauermagneten 50 unterhalb des ersten Tragrings mit nach unten weisenden Elektromagnetpolen 48 angeordnet ist. Die tragende Verbindung zwischen dem zweiten Tragring 46 und dem Rotor 8 erfolgt durch radial außen an dem ersten Tragring 44 vorbeiführende Träger 64. Die magnetischen Anziehungskräfte zwischen den Dauermagneten 50 und den Eisenteilen der Elektromagnetpole 48 üben insgesamt vertikal nach oben gerichtete Kräfte auf den zweiten Tragring 46 und damit auf den Rotor 8 aus, wodurch die Lagerung des Rotors 8 mindestens teilweise vom Rotorgewicht entlastet wird.

In Fig. 6 erkennt man, daß an der Spitze des Mastes 4 an den Beinen 16 eine waagerechte Abschlußplatte 64 angeschweißt ist, die am Umfang verteilt nach oben ragende Zapfen 66 trägt. Durch die Zapfen 66 ist eine waagerechte Lagerungsplatte 68 in Vertikalrichtung geführt. Ein zentraler, nach oben ragender Fortsatz 70 der Lagerungsplatte 68 trägt ein Pendelkegelrollenlager 72, das mit seinem Außenring in einem Lagerungszylinder 74 aufgenommen ist. Der Lagerungszylinder 74 ist Bestandteil des Zentralbereichs 22 des Rotors 8. Das Wälzlager 72 ist in einer derartigen Höhenlage im Rotor 8 angeordnet, daß die Resultierende aus den horizontalen Windlasten, die am Rotor 8 angreifen, durch die Lagerungsebene geht.

In Fig. 6 sind mehrere Hydraulikzylinder 76 eingezeichnet, die jeweils mit ihrem unteren Ende an einem Bein 16 und mit ihrem oberen Ende an der Lagerungsplatte 68 angeschlossen sind. Mit den Hydraulikzylindern 76 kann die Lagerungsplatte 68 und damit der gesamte Rotor relativ zur Abschlußplatte 64 und damit relativ zum Mast 4 in Vertikalrichtung angehoben oder abgesenkt werden, wobei die Zapfen 66 als Führung dienen. Wenn der Rotor 8 auf diese Weise angehoben wird, vergrößert sich die Luftspaltweite 56 bei der Ausführungsvariante gemäß Fig. 3; bei der Ausführungsvariante gemäß Fig. 4 verringert sich die Luftspaltweite. Wenn der Rotor 8 abgesenkt wird, verringert sich die Luftspaltweite 56 bei der Ausführungsvariante gemäß Fig. 3 und vergrößert sich die Luftspaltweite 56 bei der Ausführungsvariante gemäß Fig. 4.

Bestimmte Wälzlagerbauarten, wie beispielsweise das Pendelkegelrollenlager 72 gemäß Fig. 6, lassen kleine Schrägstellungen der Drehachse des Rotors 8 gegenüber der Vertikalen zu. Die Umwandlungseinrichtung zur Umwandlung von Bewegungsenergie des Rotors in elektrische Energie mit Dauermagneten 50 übt jedoch eine Rückstellkraft aus, die den Rotor 8 in seine Sollage mit vertikaler Drehachse zurückzubringen trachtet, weil die in Fig. 3 und 4 gezeichnete Stellung diejenige mit den kürzesten magnetischen Flußlinien ist.

Die Lagerungsstelle 30 ist allenfalls etwas höher als der geometrischen Höhenmitte der Rotorblätter 12 entspricht, weil die Windgeschwindigkeit weiter oben meist etwas größer ist.

Am ersten Tragring 44 kann man ein weiteres, strombeaufschlagbares, nicht gezeichnetes Leitersystem vorsehen, um bedarfsweise ein Antriebsdrehmoment auf den Rotor 8 ausüben zu können. Beispielsweise kann man einzelne Paare von Elektromagnetpolen 48 mit Wicklungen eines derartigen, weiteren Leitersystems versehen statt der weiter vorn beschriebenen Wicklungen 52, in denen Strom induziert wird.

Der zweite Tragring 46 kann als mittragendes Bauteil des Rotors 8 gestaltet werden. So ist es beispielsweise möglich, die drei unteren, waagerechten Verbindungsträger 36 des Zentralbereichs 22 des Rotors 8 von Fig. 1 durch den mittragenden, zweiten Tragring 46 zu ersetzen.

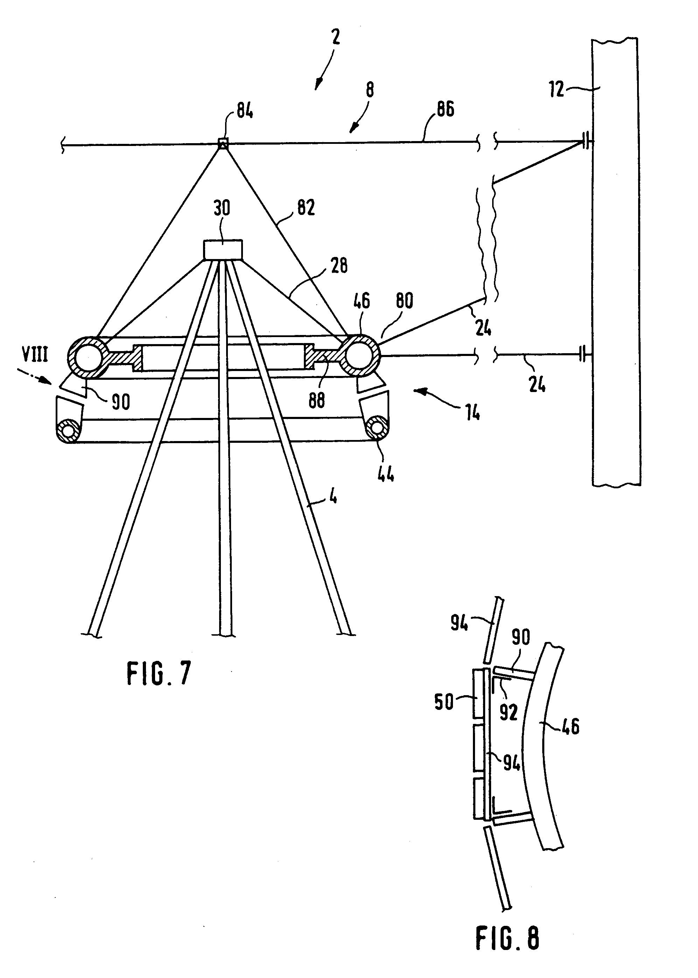

Eine alternative Konstruktion der Tragstruktur des Rotors 8 ist in Fig. 7 dargestellt. Sie besteht im wesentlichen aus dem unten angeordneten, zweiten Tragring 46, der an seinem Umfang verteilt drei Anschlußstellen 80 aufweist, drei Trägern 28, die von den Anschlußstellen 80 zur Lagerungsstelle 30 führen, drei Schrägträgern 82, die von den Anschlußstellen 80 zu einem zentralen Spitzen-Knotenpunkt 84 führen, insgesamt sechs Auslegern 24, die von den Anschlußstellen 80 zu den Rotorblättern 12 führen, und drei Radialstangen 86, die von dem Knotenpunkt 84 zu den Spitzen der oberen Ausleger 24 führen. Im Vergleich zur Konstruktion gemäß Fig. 1 wird eine wesentlich geringere Anzahl von Trägern bzw. Stangen benötigt. Zu jedem Rotorblatt 12 führen zwei Ausleger 24, die in Draufsich dreieckig sind wie die Ausleger 24 in Fig. 1 und 2. Allerdings führen die jedem Rotorblatt 12 zugeordneten zwei Ausleger 24 radial innen im wesentlichen in die Höhenebene des zweiten Tragrings 46 zusammen. Der zweite Tragring 46 ist durch einen radial nach innen ragenden Kragen 88 versteift, da er das über die Ausleger 24 auf den zweiten Tragring 46 übertragene Drehmoment um die Rotorachse 78 aufgrund der angreifenden Windkraft aufnehmen muß.

In Fig. 7 und 8 erkennt man ferner eine besonders günstige Konstruktion der Befestigung der Bauteile des zweiten Funktionsteils 47 an dem zweiten Tragring 46. An dem zweiten Tragring 46 sind beabstandet radiale, sich in senkrechten Ebenen erstreckende Laschen 90 festgeschweißt. An diesen Laschen 90 sind mittels Winkeln 92 Tragplatten 94 festgeschraubt, die jeweils eine Anzahl von Dauermagneten 50, beispielsweise drei Dauermagnete 50 tragen. Die Tragplatten 94 können eben sein, so daß sich eine insgesamt polygonale Konfiguration des zweiten Funktionsteils 47 ergibt. Durch die genannten Schraubverbindungen zwischen der jeweiligen Tragplatte 94, dem jeweiligen Winkel 92 und der jeweiligen Lasche 90 ist eine Justierungsmöglichkeit bei der Montage der Dauermagnete 50 gegeben. Das erste Funktionsteil 45 kann in analoger Weise an dem ersten Tragring 44 befestigt sein. Für die Umwandlungseinrichtung sind hochkoerzitive Dauermagnete 50 bevorzugt. Hiermit aufgebaute Umwandlungseinrichtungen können mit relativ großer Luftspaltweite konstruiert werden, woraus die Möglichkeit relativ großer Toleranzen und der beschriebenen, polygonalen Konfiguration resultiert.

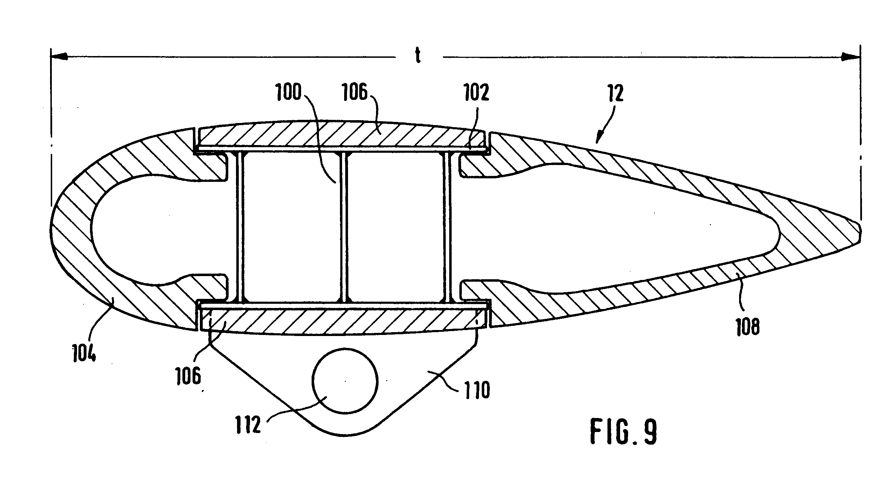

Anhand von Fig. 9 wird ein bevorzugter konstruktiver Aufbau der Rotorblätter 12 erläutert. Die tragende Struktur des gezeichneten Rotorblatts besteht aus einem im wesentlichen rechteckigen Hohlkasten 100, der entweder aus kräftigen Blechen zusammengeschweißt oder ein Walz-oder Strangpreßprofil ist. An den Ecken des Hohlkastens 100 sind Überstände 102 vorhanden, die sich im wesentlichen in Erstreckungsrichtung der Blattiefe t erstrekken. Der Hohlkasten 100 geht nahezu über die gesamte, senkrecht zur Zeichenebene der Fig. 9 verlaufende Länge des Rotorblatts 12 unverwunden und mit gleichbleibendem Querschnitt durch.

An dem Hohlkasten 100 sind strömungsprofilgebende Kunstelemente befestigt, und zwar ein vorderes Kunststoffelement 104, spiegelbildlich zwei mittlere Kunststoffelemente 106 und ein hinteres Kunststoffelement 108. Das vordere Kunststoffelemente 104 greift mit seinem hinteren Endbereich zwischen die beiden nach vorn ragenden Überstände 102 und ist dort befestigt. Die beiden mittleren Kunststoffelemente 106 bedecken außenseitig die radial äußere Fläche und die radial innere Fläche des Hohlkastens 100. Das hintere Kunststoffelement 108 ragt mit seinem vorderen Endbereich zwischen die nach hinten ragenden Überstände 102 und ist dort befestigt. Die Kunststoffelemente 104, 106, 108 bestehen bevorzugt aus Polyurethan, auf das außen eine glatte Haut auflamminiert ist. Das vordere Kunststoffelement 104 und das hintere Kunststoffelement 108 können innen hohl sein. Die Kunststoffelemente 104, 106, 108 können jeweils über die gesamte Länge des Rotorblatts 12 durchgehen, können sich aber auch aus längs des Rotorblatts 12 aneinandergesetzten Abschnitten zusammensetzen.

Auch die durch die Kunststoffelemente 104, 106, 108 gegebene Querschnittsgestalt des Rotorblatts 12 ist über nahezu die gesamte Länge des Rotoblatts gleichbleibend. Lediglich im oberen und im unteren Endbereich des Rotorblatts verjüngt sich der Querschnitt, wie in Fig. 1 gezeichnet.

In Fig. 9 erkennt man ferner eine waagerechte, plattenförmige Anschlußlasche 110, die radial nach innen weisend an den Hohlkasten 100 angeschweißt ist. Die Anschlußlasche 110 weist ein Anschlußauge 112 auf, mit dem das Rotorblatt 12 um eine vertikale Gelenkachse schwenkbar an der Rotortragstruktur befestigt ist. Das Rotorblatt weist in seiner Längsrichtung beabstandet zwei derartige Anschlußlaschen 110 auf, und zwar jeweils eine zur gelenkigen Befestigung an einem der beiden zugeordneten Ausleger 24. Man erkennt, daß infolge des Vorsehens des Anschlußauges 112 radial innerhalb des Bereichs des Strömungsprofils die Umströmung des Rotorblatts 12 nur minimal beeinflußt wird und überdies der Hohlkasten 100 nicht in einer seine Festigkeit beeinträchtigenden Weise unterbrochen wird, sondern ununterbrochen längs durchgeht.

Die beschriebene Windkraftanlage hat beispielsweise einen Anordnungsdurchmesser D der Rotorblätter 12 von etwa 30 m, eine Rotorblattiefe t von etwa 3 m, eine Auslegungs-Umfangsgeschwindigkeit der Rotorblätter 12 von etwa 30 m/s, eine aufrechte Rotorblattlänge von etwa 20 m, und bei einer Windgeschwindigkeit von etwa 17 m/s eine Leistung im Bereich von 10 bis 15 MW.

**Patentansprüche**

1. Windkraftanlage (2) zur Nutzbarmachung von Windenergie, mit einem auf einem Mast (4) angeordneten, unter der Einwirkung von Wind um eine aufrechte Drehachse (78) drehbaren Rotor (8), der mit mehreren, sich aufrecht erstreckenden, von der Drehachse (78) beabstandeten Rotorblättern (12) versehen ist, wobei der Rotor (8) pro Rotorblatt (12) zwei übereinander angeordnete, innen im wesentlichen in einer Höhenebene zusammenlaufende und außen zu dem Rotorblatt (12) führende Ausleger (24) aufweist,
dadurch gekennzeichnet,
daß die Ausleger (24) in Draufsicht im wesentlichen dreieckförmig sind,
und daß der Rotor (8) einen Zentralbereich (22) aufweist, an den die Ausleger (24) zur Übertragung von Drehmoment um die Rotordrehachse (78) mit ihrer Basis angeschlossen sind.

2. Windkraftanlage (2) nach Anspruch 1, dadurch gekennzeichnet, daß die Ausleger (24) jeweils aus zwei Trägern aufgebaut sind.

3. Windkraftanlage (2) nach Anspruch 1 oder 2, dadurch gekennzeichnet, daß der Zentralbereich (22) des Rotors (8) aus Trägern (28, 32, 34, 36) aufgebaut ist.

4. Windkraftanlage (2) nach einem der Ansprüche 1 bis 4, dadurch gekennzeichnet, daß der Zentralbereich (22) des Rotors Träger (28) aufweist, die nach schräg oben zu einer Lagerungsstelle (30) an dem Mast (4) führen.

5. Windkraftanlage (2) nach einem der Ansprüche 1 bis 3, dadurch gekennzeichnet, daß pro Rotorblatt (12) oberhalb der zwei Ausleger (24) eine von dem Rotorblatt (12) zu dem Zentrum der Windkraftanlage (2) führende Radialstange (86) vorgesehen ist.

6. Windkraftanlage (2) nach einem der Ansprüche 1 bis 5, dadurch gekennzeichnet, daß in Draufsicht umfangsmäßig benachbarte Ausleger (24) jeweils zu Anschlußstellen (80) an dem Zentralbereich (22) zusammenlaufen.

7. Windkraftanlage (2) nach einem der Ansprüche 1 bis 6, **dadurch gekennzeichnet,** daß die Rotorblätter (12) - gemessen in Tangentialrichtung ihres Anordnungsdurchmessers (D) - eine Blattiefe (t) entsprechend folgender Gleichung haben:

$$t = 0,2 \text{ bis } 0,4 \, D/n$$

wobei t die Blattiefe, D den Rotorblatt-Anordnungsdurchmesser und n die Anzahl der Rotorblätter (12) des Rotors (8) bedeutet.

8. Windkraftanlage (2) nach einem der Ansprüche 1 bis 7, **gekennzeichnet** durch eine Auslegung auf eine Umlaufgeschwindigkeit der Rotorblätter (12) unter 60 m/s, vorzugsweise unter 50 m/s, besonders vorzugsweise unter 40 m/s.

9. Windkraftanlage (2) nach einem der Ansprüche 1 bis 8, **dadurch gekennzeichnet,** daß die aufrechte Länge der Rotorblätter (12) weniger als 100 % der Rotorblatt-Anordnungsdurchmesser (D) beträgt, vorzugsweise weniger als 80 %, besonders bevorzugt 45 bis 70 %.

10. Windkraftanlage (2) nach einem der Ansprüche 1 bis 9, **dadurch gekennzeichnet,** daß die Rotorblätter (12) als Blechkastenkonstruktion ausgebildet sind, vorzugsweise in Form eines längsverlaufenden Hohlkastens (100), an dem strömungsprofilgebende Kunststoffelemente (104, 106, 108) befestigt sind.

11. Windkraftanlage (2) nach einem der Ansprüche 1 bis 10, **dadurch gekennzeichnet,** daß die Rotorblätter (12) im wesentlichen unverwunden sind.

12. Windkraftanlage (2) nach einem der Ansprüche 1 bis 11, **dadurch gekennzeichnet,** daß die Rotorblätter (12) im wesentlichen über ihre Länge gleichbleibenden Querschnitt aufweisen.

13. Windkraftanlage (2) nach einem der Ansprüche 1 bis 12, **dadurch gekennzeichnet,** daß drei oder fünf Rotorblätter (12) vorgesehen sind.

14. Windkraftanlage (2) nach einem der Ansprüche 1 bis 13, **dadurch gekennzeichnet,** daß die freitragende, aufrechte Länge der Rotorblätter (12) oberhalb und/oder unterhalb der Anschlußstellen (38) an der Tragstruktur (22) des Rotors (8) weniger als 40 %, vorzugsweise weniger als 30 %, der aufrechten Rotorblattlänge beträgt.

15. Windkraftanlage (2) nach einem der Ansprüche 1 bis 14, **dadurch gekennzeichnet,** daß die Rotorblätter (12) um eine aufrechte Schwenkachse gelenkig an der Tragstruktur (22) des Rotors (8) befestigt sind, wobei vorzugsweise die Schwenkachse jeweils außerhalb des Hohlkastens (100) liegt.

16. Windkraftanlage (2) nach einem der Ansprüche 1 bis 15, **dadurch gekennzeichnet,** daß die Rotorblätter (12) im Bereich der Anschlußstellen (38) an die Tragstruktur (22) des Rotors (8) zusätzlich versteift sind, vorzugsweise durch lokale Vergrößerung der Blechstärke der Blechkastenkonstruktion.

17. Windkraftanlage (2) nach einem der Ansprüche 1 bis 16, **dadurch gekennzeichnet,** daß der Rotor (8) an nur einer Lagerungsstelle (30) an dem Mast (4) gelagert ist.

18. Windkraftanlage nach Anspruch 17, **dadurch gekennzeichnet,** daß die Lagerungsstelle (30) in einer im wesentlichen der Höhenlage der Windkraftresultierenden entsprechenden Höhenlage der Rotors (8) vorgesehen ist.

19. Windkraftanlage (2) nach einem der Ansprüche 1 bis 18, **dadurch gekennzeichnet,** daß die Lagerung des Rotors (8) so ausgebildet ist, daß sie kleine Schrägstellungen des Rotors (8) zuläßt.

20. Windkraftanlage (2) nach einem der Ansprüche 1 bis 19, **gekennzeichnet** durch eine Einrichtung (14) zur Umwandlung von Bewegungsenergie des Rotors (8) in elektrische Enregie, welche Einrichtung (14) - relativ zueiander drehbar und sich unter Freilassung eines Luftspalts (54) gegenüberliegend - ein erstes Funktionsteil (45) und ein zweites Funktionsteil (47) aufweist, wobei eines der beiden Funktionsteile (45, 47) ein Erregersystem (50) aufweist.

21. Windkraftanlage (2) nach Anspruch 20, **dadurch gekennzeichnet,** daß der Mast einen im wesentlichen horizontal angeordneten, ersten Tragring (44) großen Durchmessers für das erste Funktionsteil (45) und der Rotor (8) einen im wesentlichen horizontal angeordneten, zweiten Tragring (46) großen Durchmessers für das zweite Funktionsteil (47) aufweist.

22. Windkraftanlage (2) nach Anspruch 21, dadurch gekennzeichnet, daß der zweite Tragring (46) an dem Zentralbereich (22) des Rotors (8) befestigt ist.

23. Windkraftanlage (2) nach Anspruch 21 oder 22, dadurch gekennzeichnet, daß der zweite Tragring (46) mittragender Bestandteil des Zentralbereichs (22) des Rotors (8) ist.

**Claims**

1. A wind power plant (2) for utilizing wind energy, comprising a rotor (8) disposed on a mast (4) and rotatable about an upright axis of rotation (78) under the effect of wind and provided with a plurality of upright rotor blades (12) which are spaced from the axis of rotation (78), the rotor (8) having for each rotor blade (12) two extension arms (24) disposed above each other and converging inwardly substantially in one height plane and extending outwardly to the rotor blade (12),
characterized in that the extension arms (24), as seen in a plan view, are of substantially triangular configuration, and in that the rotor (8) has a central portion (22) to which the extension arms (24) are connected with their base for transmitting torque about the axis of rotation (78) of the rotor.

2. A wind power plant (2) according to claim 1, characterized in that the extension arms (24) are each composed of two beams.

3. A wind power plant (2) according to claim 1 or 2,
characterized in that the central portion (22) of the rotor (8) is composed of beams (28, 32, 34, 36).

4. A wind power plant (2) according to any one of claims 1 to 3,
characterized in that the central portion (22) of the rotor comprises beams (28) extending obliquely upwardly to a bearing location (30) at the mast (4).

5. A wind power plant (2) according to any one of claims 1 to 3,
characterized in that for each rotor blade (12) a radial rod (86) is provided above the two extension arms (24) which extends from the rotor blade (12) to the centre of the wind power plant (2).

6. A wind power plant (2) according to any one of claims 1 to 5,

characterized in that, as seen in a plan view, circumferentially adjacent extension arms (24) each converge in connecting points (80) at the central portion (22).

7. A wind power plant (2) according to any one of claims 1 to 6,
characterized in that the rotor blades (12) - as measured in tangential direction of their arrangement diameter (D) - have a blade depth (t) corresponding to the following equation:

t = 0.2 to 0.4 D/n

wherein t is the blade depth, D is the rotor blade arrangement diameter and n is the number of the rotor blades (12) of the rotor (8).

8. A wind power plant (2) according to any one of claims 1 to 7,
characterized by a design to a rotational speed of the rotor blades (12) below 60 m/s, preferably below 50 m/s, and in particularly preferred manner below 40 m/s.

9. A wind power plant (2) according to any one of claims 1 to 8,
characterized in that the upright length of the rotor blades (12) is less than 100 % of the rotor blade arrangement diameter (D), preferably less than 80 %, and in particularly preferred manner 45 to 70 %.

10. A wind power plant (2) according to any one of claims 1 to 9,
characterized in that the rotor blades (12) are provided in the form of a sheet metal box construction, preferably in the form of a longitudinally extending hollow box (100) to which flow profile establishing plastics members (104, 106, 108) are attached.

11. A wind power plant (2) according to any one of claims 1 to 10,
characterized in that the rotor blades (12) are substantially untwisted.

12. A wind power plant (2) according to any one of claims 1 to 11,
characterized in that the rotor blades (12) have a cross-section that is substantially uniform across their length.

13. A wind power plant (2) according to any one of claims 1 to 12,
characterized in that three or five rotor blades (12) are provided.

14. A wind power plant (2) according to any one of claims 1 to 13,
characterized in that the cantilever upright length of the rotor blades (12) above and/or below the connecting points (38) to the supporting structure (22) of the rotor (8) is less than 40 %, preferably less than 30 %, of the upright rotor blade length.

15. A wind power plant (2) according to any one of claims 1 to 14,
characterized in that the rotor blades (12) are mounted on the supporting structure (22) of the rotor (8) so as to be pivotable about an upright pivotal axis, with the pivotal axis being preferably located outside of the respective hollow box (100).

16. A wind power plant (2) according to any one of claims 1 to 15,
characterized in that the rotor blades (12) are additionally reinforced in the region of the connecting points (38) to the supporting structure, preferably by a local increase in the sheet metal thickness of the sheet metal box construction.

17. A wind power plant (2) according to any one of claims 1 to 16,
characterized in that the rotor (8) is supported on the mast (4) at only one bearing location (30).

18. A wind power plant according to claim 17,
characterized in that the bearing location is provided at a height of the rotor (8) corresponding substantially to the height of the wind force resultant.

19. A wind power plant (2) according to any one of claims 1 to 18,
characterized in that the support of the rotor (8) is designed so as to permit small inclinations of the rotor (8).

20. A wind power plant (2) according to any one of claims 1 to 19,
characterized by a means (14) for converting movement energy of the rotor (8) into electrical energy, said means comprising a first functional part (45) and a second functional part (47) - which are rotatable relative to each other and located opposite each other with an air gap left free therebetween -, one of said two functional parts (45, 47) having an exciter system (50).

**21.** A wind power plant (2) according to claim 20, characterized in that the mast has a substantially horizontally disposed first supporting ring (44) of large diameter for the first functional part (45) and the rotor (8) has a substantially horizontally disposed second supporting ring (46) of large diameter for the second functional part (47).

**22.** A wind power plant (2) according to claim 21, characterized in that the second supporting ring (46) is attached to the central portion (22) of the rotor (8).

**23.** A wind power plant (2) according to claim 21 or 22,
characterized in that the second supporting ring (46) is a co-supporting component part of the central portion (22) of the rotor (8).

**Revendications**

**1.** Eolienne (2), pour l'utilisation de l'énergie du vent, comportant un rotor (8), disposé sur un mât (4) et pouvant tourner sous l'effet du vent, autour d'un axe de rotation vertical (78), rotor équipé de plusieurs pales de rotor (12) orientées verticalement et espacées de l'axe de rotation (78), le rotor présentant par paie de rotor (12) deux bras (24), disposés l'un au dessus de l'autre, cheminant intérieurement sensiblement au même niveau vertical et menant extérieurement à la pale de rotor (12), caractérisée en ce que
les bras (24) présentent, en vue de dessus, une forme sensiblement triangulaire,
et en ce que le rotor (8) présente une zone centrale (22) à laquelle sont raccordés les bras (24), en vue de transmettre à l'aide de leur base le couple de la rotation autour de l'axe de rotation de rotor (78).

**2.** Eolienne (2) selon la revendication 1, caractérisée en ce que les bras (24) sont chacun composés de deux poutres.

**3.** Eolienne (2) selon la revendication 1 ou 2, caractérisée en ce que la zone centrale (22) du rotor (8) est composée de poutres (28,32,34,36).

**4.** Eolienne (2) selon l'une des revendications 1 à 3, caractérisée en ce que la zone centrale (22) du rotor présente des poutres (28), orientées obliquement vers le haut, en un point de palier (30) situé sur le mât (4).

**5.** Eolienne (2) selon l'une des revendications 1 à 3, caractérisée en ce qu'est prévu par paie de rotor (12), au-dessus des deux bras (24), une tige radiale (86) menant de la pale de rotor (12) au centre de l'éolienne (2).

**6.** Eolienne (2) selon l'une des revendications 1 à 5, caractérisée en ce qu'en vue de dessus, les bras (24) voisins en périphérie convergent tous vers les points de raccordement (80) situés sur la zone centrale (22).

**7.** Eolienne (2) selon l'une des revendications 1 à 6, caractérisée en ce que - mesurées en direction tangentielle de leur diamètres d'installation (D) - les pales de rotor (12) ont une longueur de profil de pale (t) qui suit l'expression suivante :

$$t = 0{,}2 \ \text{à} \ 0{,}4 \ D/n$$

t étant la longueur du profil de pale, D le diamètre d'installation des pales de rotor et n le nombre des pales (12) du rotor (8).

**8.** Eolienne (2) sel on l'une des revendications 1 à 7, caractérisée par une conception prévoyant une vitesse périphérique des pales de rotor (12) inférieure à 60 m/s, de préférence inférieure à 50 m/s, de manière particulièrement préférée inférieure à 40 m/s.

**9.** Eolienne (2) selon l'une des revendications 1 à 8, caractérisée en ce que la longueur verticale des pales de rotor (12) est inférieure à 100 % du diamètre d'installation (D) des pales de rotor, de préférence inférieure à 80 %, de manière particulièrement préférée de 45 à 70 %.

**10.** Eolienne (2) selon l'une des revendications 1 à 9, caractérisée en ce que les pales de rotor (12) sont réalisées sous forme de construction en caisson en tôle, de préférence sous forme d'un caisson creux (100) s'étendant longitudinalement, auquel sont fixés des éléments en matière synthétique (104,106,108) leur conférant un profil aérodynamique.

**11.** Eolienne (2) selon l'une des revendications 1 à 10, caractérisée en ce que les pales de rotor (12) ne présentent pratiquement pas de gauchissement.

**12.** Eolienne (2) selon l'une des revendications 1 à 11, caractérisée en ce que les pales de rotor (12) présentent une section transversale constante sur leur longueur.

**13.** Eolienne (2) selon l'une des revendications 1 à 12, caractérisée en ce que sont prévues trois ou cinq pales de rotor (12).

**14.** Eolienne (2) selon l'une des revendications 1 à 13, caractérisée en ce que la longueur verticale, assurant une transmission libre, des pales de rotor (12) au-dessus et au-dessous des points de raccordement (38) à la structure porteuse (22) du rotor (8) est inférieure à 40 %, de préférence inférieure à 30 % de la longueur verticale de la pale de rotor.

**15.** Eolienne (2) selon l'une des revendications 1 à 14, caractérisée en ce que les pales de rotor (12) sont fixées de façon articulée à la structure porteuse (22) du rotor (8), autour d'un axe de pivotement vertical, l'axe de pivotement étant de préférence situé chaque fois à l'extérieur du caisson creux (100).

**16.** Eolienne (2) selon l'une des revendications 1 à 15, caractérisée en ce que, dans la zone des points de raccordement (38) à la structure porteuse (22) du rotor (8), les pales de rotor (12) sont l'objet d'une rigidification supplémentaire, de préférence au moyen d'une augmentation locale de l'épaisseur de la tôle de la construction en caisson en tôle.

**17.** Eolienne (2) selon l'une des revendications 1 à 16, caractérisée en ce que le rotor (8) est monté à rotation sur le mât (4) en un seul point de montage à rotation (30).

**18.** Eolienne (2) selon la revendication 17, caractérisée en ce que le point de montage à rotation (30) est prévu à une position en hauteur du rotor (8) correspondant sensiblement au niveau de la résultante des forces dues au vent.

**19.** Eolienne (2) selon l'une des revendications 1 à 18, caractérisée en ce que le montage à rotation du rotor (8) est réalisé de telle façon qu'il admet de faibles écarts d'inclinaisons du rotor (8).

**20.** Eolienne (2) selon l'une des revendications 1 à 19, caractérisée par un dispositif (14) destiné à convertir l'énergie cinétique du rotor (8) en énergie électrique, dispositif (14) présentant - pouvant tourner librement et placé en face, tout en laissant subsister un entrefer (54)- une première partie fonctionnelle (45) et une deuxième partie fonctionnelle (47), l'une des deux parties fonctionnelles (45,47) présentant un système excitateur (50).

**21.** Eolienne (2) selon la revendication 20, caractérisée en ce que le mât présente un premier anneau support (44), disposé sensiblement horizontalement, de grand diamètre, pour la première partie fonctionnelle (45) et le rotor présente un deuxième anneau support (46), disposé sensiblement horizontalement, de grand diamètre, pour la deuxième partie fonctionnelle (47).

**22.** Eolienne (2) selon la revendication 21, caractérisée en ce que le deuxième anneau support (46) est fixé sur la zone centrale (22) du rotor (8).

**23.** Eolienne (2) selon la revendication 21 ou 22, caractérisée en ce que l e deuxième anneau support (46) est un constituant, portant des proéminences, de la zone centrale (22) du rotor (8).

FIG.1

FIG.2

FIG.3

FIG.4

FIG.5a

FIG.5b

FIG.6

FIG. 7

FIG. 8

14

FIG.9

EP 0 336 268 B1